# EUROPEAN PATENT APPLICATION

(11) **EP 3 819 037 A1**
(43) Date of publication of application: **12.05.2021**
(21) Application number: 19829993.5
(22) Date of filing: 14.06.2019
(51) Int. Cl.: B21D 22/00, B21D 22/26

(54) **METHOD FOR DESIGNING MOLD SHAPE AND METHOD FOR PRODUCING PRESSED PART**

(30) Priority: 03.07.2018 JP 2018126982
(71) Applicant: JFE Steel Corporation, Tokyo 100-0011 (JP)
(72) Inventor: FUJII, Yusuke, Tokyo 100-0011 (JP); YAMASAKI, Yuji, Tokyo 100-0011 (JP)
(74) Representative: Hoffmann Eitle
(86) International application number: PCT/JP2019/023719
(87) International publication number: WO 2020/008840

(57) **Abstract**

A preformed shape capable of suppressing occurrence of cracks and wrinkles in a metal sheet can be determined by simple means. A metal sheet (1) is press formed into a three-dimensionally shaped component (5). A method therefor includes a first step (2) of press forming the metal sheet (1) into an intermediate component having a preformed shape (3) including a shape of the three-dimensionally shaped component (5) crushed under a load applying condition for applying load in a direction in which at least a part of the three-dimensionally shaped component (5) is straightened and a second step (4) of press forming the intermediate component into the three-dimensionally shaped component (5).

## Description

### Technical Field

The present invention relates to a method for designing a die shape that enables forming with reduced cracking and wrinkling in a metal sheet and a method for manufacturing a pressed component.

### Background Art

Press forming is one of typical metal processing methods for obtaining a component having a desired three-dimensional shape by sandwiching and pressing a metal sheet between a pair of dies to form the metal sheet, such as a steel sheet, in such a manner as to follow a die shape. Additionally, press forming technologies are used in a wide range of manufacturing fields, such as automobile components, machinery components, building materials, and home appliances.

A major issue in press formability is cracking and wrinkling. Cracking occurs when a metal sheet is stretched beyond its own ductility by press forming. Wrinkling occurs when a metal sheet is compressed to be smaller than its own buckling strength.

On the other hand, PTL 1 and 2 describe designing of a die shape in consideration of the length (cross-sectional line length) of a metal sheet so as not cause excessive expansion and contraction of the metal sheet. Additionally, PTL 3 describes a method for optimizing a cross-sectional line length by repeating designing of a die shape.

In addition, PTL 4 describes a method of using a shape during development obtained during development of a final component shape as a press-formed product shape of a previous step. PTL 4 states that it is preferable to set the shape during development mentioned above by opening each of flange portions of the final component shape in widthwise outward directions of the component.

### Citation List

### Patent Literature

PTL 1: JP 2010-115674 A
PTL 2: JP Pat. No. 5867657
PTL 3: JP H08-006986
PTL 4: WO 2017/010470

### Summary of Invention

### Technical Problem

However, the range of application of PTL 1 is limited only to the flange portions, and cannot be universally used to various component shapes.

Additionally, PTL 2 is the method for designing the die shape in such a manner as to match the cross-sectional line length of a shape of a previous step (a preforming step) with the cross-sectional line length of a final shape, and is applicable to various component shapes. However, when press forming into a complicated component shape, cracking and wrinkling can occur in a portion where cross-sectional shape is not taken into consideration. On the other hand, when trying to design considering all cross sections, it takes more time and more effort to design.

In addition, PTL 3 proposes the method for optimizing a shape by repeatedly designing a three-dimensional component shape. However, designing a three-dimensional shape requires enormous amounts of time and effort unless variables are limited, so that it is not suitable for complicated component shapes.

Furthermore, in the method of PTL 4, it is difficult to find how to form a shape during development. If it is a simple hat-shaped component having the same cross section in a longitudinal direction, it is considered that a shape during development can be formed by uniformly translating all the flange portions to the outside of the component. However, in the case of a component shape curved on one side of a widthwise direction along a longitudinal direction, for example, as described in PTL 4, uniform translation of all the flange portions causes expansion of an edge portion low in rigidity and punch shoulders, die shoulders, and a curved portion that are prone to stress concentration. As a result, the line length of the shape during development becomes longer than the line length of the component shape, which is problematic in that wrinkles can occur during pressing into a final component shape. Therefore, to form the shape during development without causing expansion and contraction by the method of PTL 4, it is necessary to deform by applying an appropriate force to each portion of a component in an appropriate direction. However, this makes it more difficult to form a shape during development as the component shape becomes more complicated.

The present invention has focused on the points as described above, and it is an object of the present invention to enable a preformed shape capable of suppressing occurrence of cracks and wrinkles in a metal sheet to be determined by simple means.

### Solution to Problem

Press forming is not suitable for moving a die in three dimensions, and therefore disadvantageous in that there are many restrictions in ideal forming of a three-dimensional component shape. Additionally, during press forming, not all portions of a flat metal sheet expand or contract and there is change in cross-sectional line length. Then, through repeated intensive and extensive studies, the present inventors have devised a method of crushing flat a three-dimensional component shape into a shape such that a portion where it is desired to cause expansion or contraction is easily press formed and using the shape as a preformed shape.

Specifically, to achieve the object, a method for designing a die shape of an aspect of the present invention is a method for designing a die shape for use in a press step before a final press step when forming a metal sheet into a three-dimensionally shaped component by a plurality of stages of press steps, the method including designing the die shape in such a manner as to form into a pressed component having a preformed shape including a shape of the three-dimensionally shaped component crushed in a direction in which a shape of at least a part of the three-dimensionally shaped component is straightened.

Additionally, a method for manufacturing a pressed component of one aspect of the present invention is a method for manufacturing a pressed component by press forming a metal sheet into a three-dimensionally shaped component, the method including a first step of press forming the metal sheet into an intermediate component having a preformed shape including a shape of the three-dimensionally shaped component crushed in a direction in which a shape of at least a part of the three-dimensionally shaped component is straightened and a second step of press forming the intermediate component into the three-dimensionally shaped component.

### Advantageous Effects of Invention

According to the one aspect of the present invention, the preformed shape can be designed in consideration of all cross-sectional line lengths of the component by simple means, thus enabling manufacturing of a press die effective to prevent occurrence of cracks and wrinkles.

Additionally, according to the one aspect of the present invention, an appropriate preformed shape can be determined by simple means, which facilitates forming of a complicated component shape.

### Brief Description of Drawings

FIG. 1 is a block diagram illustrating an example of a press step according to an embodiment based on the present invention;
FIG. 2 is a diagram illustrating a three-dimensional shape and a preformed shape according to the embodiment based on the present invention;
FIG. 3 is a diagram illustrating a change on a cross section taken along line A-A';
FIG. 4 is a diagram illustrating a change on a cross section taken along line B-B';
FIG. 5 is a diagram illustrating a change on a cross section taken along line C-C';
FIG. 6 is a diagram illustrating an example of occurrence of buckling;
FIG. 7 is a diagram illustrating a preformed shape of Example;
FIG. 8 is a diagram illustrating the preformed shape reduced by 0.8 times in a height direction;
FIG. 9 is a diagram illustrating the preformed shape reduced by 0.5 times in the height direction;
FIG. 10 is a diagram illustrating a desired three-dimensional shape in Example 4, in which FIG. 10A is a perspective diagram, FIG. 10B is a cross-sectional diagram taken along line A-A' of FIG. 10A, FIG. 10C is a cross-sectional diagram taken along line B-B' of FIG. 10A, and FIG. 10B is a cross-sectional diagram taken along line C-C' of FIG. 10A;
FIG. 11 is a diagram illustrating a preformed shape of Comparative Example 4-1; and
FIG. 12 is a diagram illustrating a preformed shape of Example 4-1.

### Description of Embodiments

Hereinafter, embodiments of the present invention will be described with reference to the drawings.

When forming a component having a three-dimensional shape such that cracking and wrinkling are caused by single press forming to manufacture a component having a desired pressed component shape (a three-dimensional shape), it is common that a metal sheet is formed into the component having a desired three-dimensional shape by a plurality of stages of press steps. The present invention is suitable for manufacturing of components having such a complicated three-dimensional shape by press forming.

Additionally, the present invention enables forming of metal sheets having higher strength, and therefore is also useful when forming a high-strength metal sheet into a three-dimensionally shaped component. For example, when the metal sheet is a steel sheet, it is preferable to use a material having a tensile strength of 590 MPa or more, and more preferable to use a material having a tensile strength of 980 MPa or more.

### <Method for Manufacturing Pressed Component>

In the present embodiment, a metal sheet is press formed into a component having a desired three-dimensional shape by a plurality of stages of press steps.

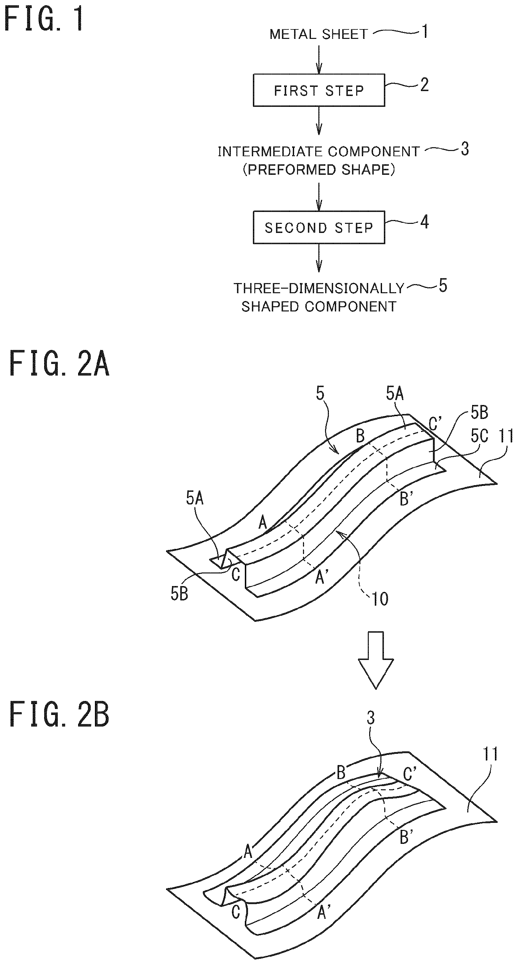

The plurality of stages of press steps include a first step 2 and a second step 4, as illustrated in FIG. 1.

### [First Step]

The first step 2 is a press step of press forming a metal sheet 1 into an intermediate component having a preformed shape 3 including a shape of a component 5 having a desired three-dimensional shape crushed in a direction in which a shape of at least a part of the component 5 having a desired three-dimensional shape is straightened.

The above-mentioned "at least a part" is a part including a portion where cracking and wrinkling are estimated to occur when forming into the desired three-dimensional shape by, for example, single press forming.

Note that even if the same three-dimensional shape is crushed in the straightening direction, the crushed shape may vary depending on the material that specifies the component, and the like.

In the present embodiment, structural analysis (forming simulation) is performed under a load applying condition for applying load in a direction in which the component having a desired three-dimensional shape is straightened to obtain the preformed shape including the above-described crushed shape. Additionally, an area percentage of the surface crushed in the straightening direction corresponding to the above-mentioned "at a least a part" is, for example, 50% or more of an area of a surface facing up and down in the component 5 having a desired three-dimensional shape, preferably 80% or more thereof. There is no particular upper limit thereof. In other words, the upper limit is 100%.

The following description will be given of an example of a case where the preformed shape 3 is a shape in which the entire three-dimensional shape of the component 5 having a desired three-dimensional shape is crushed in the straightening direction.

Here, the shape of a die for forming into a pressed component having the obtained preformed shape 3 is designed, and in the first step 2, press forming using the die is performed to manufacture an intermediate component having the preformed shape 3 following the shape of the die.

The rate of crushing when determining the preformed shape 3 is set, for example, such that an amount of change in a height direction from the component having the three-dimensional shape (a shape before applying load) that is a final component shape in a load applying direction (usually, a pressing direction) is 10% or more. Preferably, the amount of change in the height direction is 50% or more. The upper limit of the amount of change in the height direction is not particularly limited, but, for example, is 90% or less.

### [Second Step]

The second step 4 is a press step of press forming the intermediate component into the component 5 having a desired three-dimensional shape.

Another press step may be included between the first step 2 and the second step 4. Before the first step 2, a press step for another preforming step may be provided.

Additionally, the first step 2 may include a plurality of stages of press steps. For example, there is obtained a plurality of preformed shapes 3 different in the rate of crushing of the three-dimensionally shaped component 5, and the first step 2 on an upstream side is set as a press step of press forming into an intermediate component having the preformed shape 3 larger in crushing rate as a forming shape.

### <Preformed Shape 3>

A description will be given of a method for determining the preformed shape 3 produced in the first step 2.

In the present embodiment, the three-dimensionally shaped component 5 is a component having a hat-shaped cross section including a top sheet portion 5A, a pair of left and right vertical wall portions 5B continuous to both left and right sides of the top sheet portion 5A, and a flange portion 5C continuous to each vertical wall portion 5B, as illustrated in FIG. 2A. In addition, the three-dimensionally shaped component 5 of the present example is a three-dimensionally shaped component which is vertically curved along a longitudinal direction and in which there are compression and elongation of the material along the longitudinal direction, as illustrated in FIG. 2A.

When manufacturing the component 5 having such a hat-shaped cross section by press forming, an angle (an angle on a smaller angle side) of a ridgeline between the top sheet portion 5A and the each vertical wall portion 5B is 90 degrees or more for the convenience of processing by press forming. Due to that, when load is applied to the three-dimensionally shaped component 5 from above and the three-dimensionally shaped component 5 is crushed, the three-dimensionally shaped component 5 is usually crushed in a direction in which it is straightened if the vertical wall portions 5B and the flange portions 5C are not restrained from moving to spread out to left and right.

As the load applying condition for applying load in the direction in which the component 5 having the desired three-dimensional shape is straightened, a direction in which the three-dimensionally shaped component 5 is straightened, i.e., a load applying direction is set to, for example, a stroke direction of the press machine in the second step 4, i.e., a pressing direction. The load applying direction is set to, for example, the same direction as a direction in which load is applied to the top sheet portion of the component in the second step 4 that is the next step.

Here, the direction in which the three-dimensionally shaped component 5 is straightened is preferably set to a direction that is not a direction (a buckling direction) in which the vertical wall portions 5B are folded inward and overlapped by itself. Accordingly, the load applying direction does not necessarily have to be coincident with the stroke direction of the press machine.

In the present embodiment, a direction that corresponds to a vertical downward direction when the component having the desired three-dimensional shape is placed on a horizontal surface is set to the load applying direction.

The preformed shape 3 that is obtained by applying load so that the component having the desired three-dimensional shape is straightened may be obtained by actually crushing by applying load to the three-dimensionally shaped component 5 from above. However, it is simpler to obtain through forming simulation (structural analysis) such as a finite element method using a computer.

The load to be applied in the straightening direction as the load applying condition may be applied by any method, such as hydrostatic pressure, uniformly distributed load, or crushing by a die model. However, the load applying condition is set to the amount of crushing that does not generate a portion of the shape that is folded and overlapped by itself in the stroke direction of the press machine. The load applying direction is, for example, the same direction for all surfaces.

The magnitude and direction of the load to be applied may be partially different.

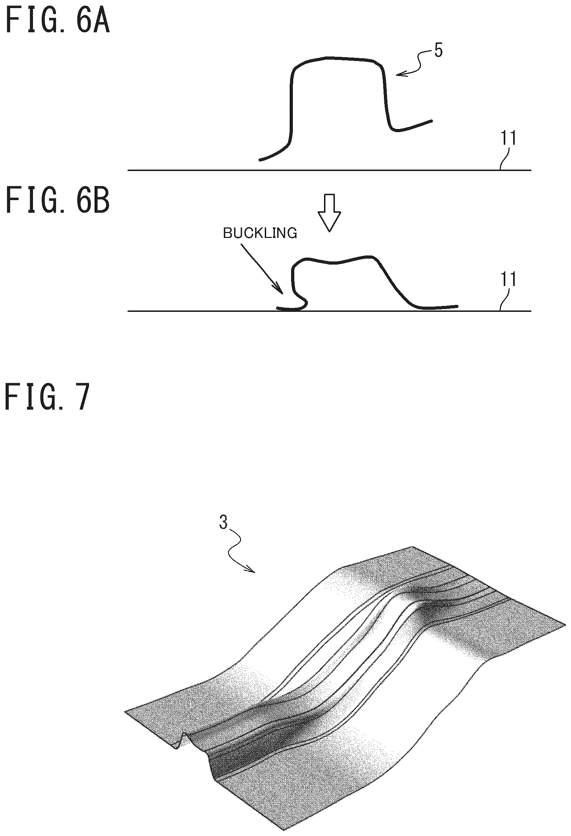

The shape of a restraining surface 11 that restrains downward movement when crushing the three-dimensionally shaped component 5 may be a plane shape, such as a plane orthogonal to the load direction. However, as in FIG. 2A, in the case of a three-dimensionally shaped component having a component shape that is curved or twisted up and down, the flange portion 5c and the vertical wall portion 5b may buckle and be folded inward of the component when the three-dimensionally shaped component is pressed from above against the restraining surface having the simple plane shape, as in FIG. 6.

Therefore, the preformed shape 3 is determined preferably by setting the restraining surface 11 to a surface shape in which a longitudinal contour shape (see reference sign 10 of FIG. 2A) of a lower end face of each vertical wall portion 5B is extended to left and right and applying load to the three-dimensionally shaped component 5 in a state where the restraining surface 11 restrains movement of the lower end face of the each vertical wall portion 5B in a normal direction of the restraining surface 11. Adopting such a restraining surface 11 can suppress the flange portions 5C and the vertical wall portions 5B from buckling and being folded inward of the component.

As in the present example, in the case of the shape in which the flange portion 5C is continuous to the lower end portion of the each vertical wall portion 5B, the restraining surface 11 may have, for example, a surface shape obtained by extending lower surface shapes of the flange portions 5C.

FIG. 2 exemplifies a case where the restraining surface 11 restraining the lower end faces of the left and right vertical wall portions 5B is made of one continuous surface. However, if the contour shape of the lower end face of the each vertical wall portion 5B is different or there is a height difference between them, the restraining surface 11 is individually set for the lower end face of the each vertical wall portion 5B.

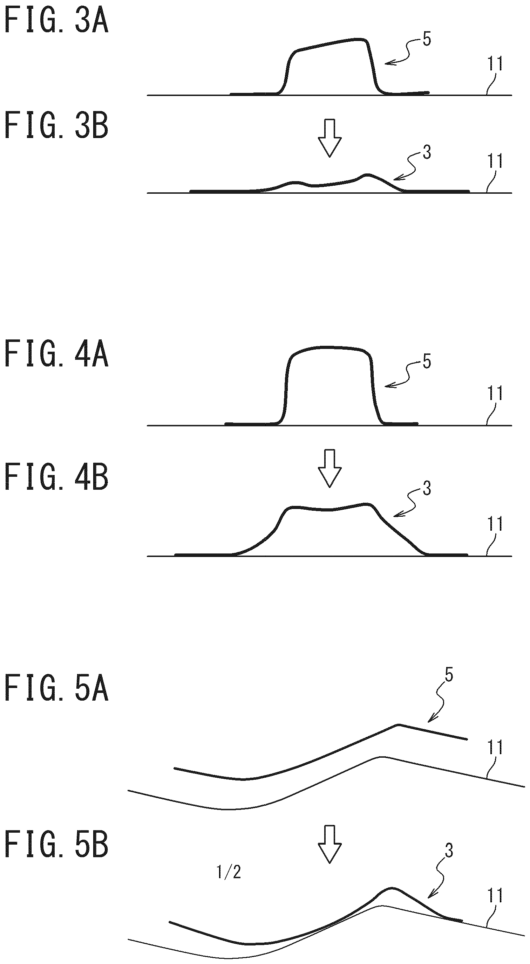

FIG. 2 illustrates an example where a load with the same magnitude is applied to the entire three-dimensionally shaped component 5 from an upper side toward the restraining surface 11 to crush the three-dimensionally shaped component 5 in a direction in which the three-dimensionally shaped component 5 is straightened. FIGS. 3 to 5 illustrate changes in each cross section at that time.

Additionally, when load is applied to the three-dimensionally shaped component 5 from above, the flange portions 5C are displaced so as to be opened in left and right directions along the restraining surface 11. At this time, the each vertical wall portion 5B is crushed while being changed such that an angle of the each vertical wall portion 5B with respect to the top sheet portion 5A is widened.

Then, when the three-dimensionally shaped component 5 is crushed by applying load in the direction in which the three-dimensionally shaped component 5 is straightened, a portion where there is no change in cross-sectional line length when the flat metal sheet 1 is formed into the component 5 having the desired three-dimensional shape returns to be flat. Additionally, a portion where there is a change in cross-sectional line length can be changed into the component 5 having a gentle three-dimensional shape easy to press form.

In addition, characteristically, when crushed, bent portions such as a punch shoulder and a die shoulder portion become starting points to return to be flat, whereas other portions do not deform so much, so that the cross-sectional line length of the component hardly changes.

Thus, deformation into an appropriate preformed shape 3 is performed automatically.

Here, when there is a portion with a changed cross-sectional line length even if the three-dimensionally shaped component 5 is crushed to be straightened, the component 5 is not deformed to be straightened down to the surface shape of the restraining surface 11.

In terms of the rate of crushing, it is effective, for example, when the amount of change in a height direction from the component 5 having the three-dimensional shape (a shape before applying load) that is a final component shape in the load applying direction is 10% or more. More preferably, the amount of change in the height direction is 50% or more. The amount of change may be determined at a position with a smallest change in the height direction.

However, the rate of crushing is a rate before the occurrence of buckling and folding inward of the flange portion 5C and the vertical wall portion 5B.

Here, the press forming method of forming the metal sheet 1 into the preformed shape 3 in the first step 2 may be any method, such as drawing, stamping, or stretching, but drawing is the most suitable. Additionally, when a portion that was the top sheet portion 5A of the component is curved as to be recessed (the left side of a cross section taken along line C-C' of FIG. 2), wrinkling can be prevented by pressing the portion using a pad.

Enabling the metal sheet 1 to be formed into the preformed shape 3 designed based on the present invention enables forming of a component shape by a press forming method mainly including bending deformation, such as stamping or cam die bending, in the second step 4 and other next steps.

Here, if the preformed shape 3 determined above causes lack of the ductility of the metal sheet 1 and does not allow for forming, the shape of the preformed shape 3 determined above is furthermore reset to a shape in which the entire shape of the preformed shape 3 determined above is reduced toward the load applying direction at a preset reduction rate. The reduction rate is, for example, from 0.8 to 0.4 times. By resetting the shape of the preformed shape 3 to change the preformed shape 3 into the shape reduced in the height direction, a portion where expansion and contraction were insufficient in the first step 2 (preforming step) deforms in the next step. This is effective in dispersing deformation of the metal sheet 1 and thereby making it less likely to crack and wrinkle.

As described above, the present embodiment can design the preformed shape 3 in consideration of all the cross-sectional line lengths of the three-dimensionally shaped component 5 by the simple means, and thus can manufacture a press die effective in preventing cracking and wrinkling.

Additionally, according to the present embodiment, complicated component shapes can be more easily formed compared to the use of ordinary press dies.

Here, while the above embodiment has been descried by exemplifying the three-dimensionally shaped component 5 having the hat-shaped cross section, the three-dimensionally shaped component 5 may have a U-shaped cross section without the flange portions 5C. In addition, the three-dimensionally shaped component 5 is not limited to a component having a hat-shaped cross section or a U-shaped cross section. It is also possible to use a component having another three-dimensional shape that can be processed by press forming, such as an arc-shaped cross-sectional shape.

### Examples

Next, Examples based on the present invention will be described.

The present invention was verified for metal sheets A to D made of four kinds of materials shown in Table 1. The target three-dimensionally shaped component 5 was the component illustrated in FIG. 2A having the complicated shape curved in the longitudinal direction.

**Table 1**

| Material | Sheet thickness | YP | TS | El |
|---|---|---|---|---|
| A | 2.3 | 470 | 650 | 24 |
| B | 2.0 | 670 | 1050 | 15 |
| C | 1.8 | 870 | 1240 | 13 |
| D | 1.4 | 1200 | 1500 | 8 |

Then, forming simulation by the finite element method was used to determine the preformed shape 3 in which the component was straightened. The force (Newton) applied for the straightening was in parallel to a stroke direction of the press machine, and was set to a multiple of a dead weight of the component (a force obtained by multiplying a weight of the component by 9.8 N). The multiple was increased to 10 times, 100 times, and so on, and a shape that was able to be more straightened without overlapping of the cross-sectional shape of the component was determined as the preformed shape 3. In the present Example, specifically, the force was set to 7000 times the dead weight thereof.

FIG. 7 illustrates a preformed shape corresponding to a die shape designed based on the above preformed shape 3.

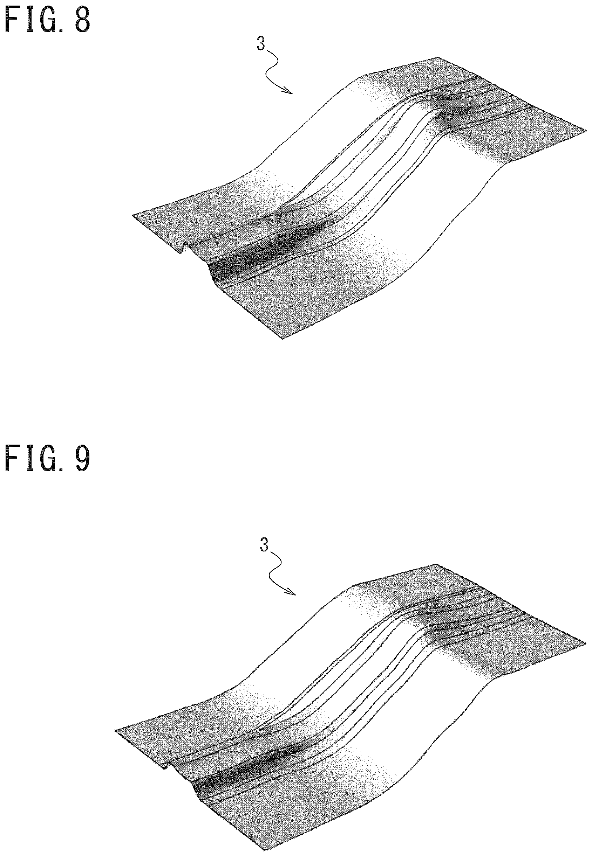

Additionally, FIGS. 8 and 9 illustrate preformed shapes 3 obtained by reducing the preformed shape 3 to 0.8 times and 0.5 times the preformed shape 3 in the stroke direction of the press machine with reference to a surface on which the flange portions 5C thereof were extended.

Table 2 shows results obtained by press forming the metal sheets A to D using various dies.

**Table 2**

| | A | B | C | D |
|---|---|---|---|---|
| Comparative Example 1 | ○ | × | × | × |
| Example 1 | ○ | ⊚ | ○ | ○ |
| Example 2 | ⊚ | ⊚ | ⊚ | ○ |
| Example 3 | ⊚ | ⊚ | ⊚ | ⊚ |

Here, if there were cracks and wrinkles, it was rated as "×". If there were small wrinkles and sheet thickness reduction that did not affect product quality, it was rated as "○", and if there were no cracks or wrinkles, it was rated as "⊚".

### <Comparative Example 1>

Comparative Example 1 is a case where the component shape of FIG. 2A was manufactured by single press forming only by drawing.

In the above Comparative Example 1, the metal sheet A had small wrinkles on the top sheet portion 5A, and the metal sheets 1B to D had noticeable cracks and wrinkles.

### <Example 1>

Example 1 is a case where the same preformed shape 3 as that of FIG. 7 was formed by drawing (first step 2), and then formed into a component shape by stamping in the next step (second step 4).

In the above Example 1, the metal sheets A to B had no cracks or wrinkles, and the metal sheets 1C to D had small sheet thickness reduction.

### <Example 2>

In Example 2, the same preformed shape 3 as that of FIG. 8 was formed by drawing (first step 2), and then formed into a component shape by stamping in the next step (second step 4) .

In this Example 3, the metal sheets A to C had no cracks or wrinkles, and the metal sheet 1D had small sheet thickness reduction.

### <Example 3>

In Example 3, the same preformed shape 3 as that of FIG. 9 was formed by drawing (first step 2), and then formed into a component shape by drawing in the next step (second step 4) .

In the above Example 3, all of the metal sheets A to D had no cracks or wrinkles.

As shown in Table 2, it has been found that when manufacturing a shape that causes cracks and wrinkles when press formed into the component 5 having the desired three-dimensional shape by the single step, as in Comparative Example 1, press forming based on the present invention, as in Examples 1 to 3, improves cracks and wrinkles to manufacture the component 5 having the desired three-dimensional shape. In this case, it has also been found that the present invention enables the preformed shape 3 to be determined by simple means even when manufacturing a component including the component 5 having the complicated three-dimensional shape.

### <Example 4>

Next, a comparison was made between the method (Comparative Example 4-1) described in PTL 4 and the method based on the present invention (Example 4-1).

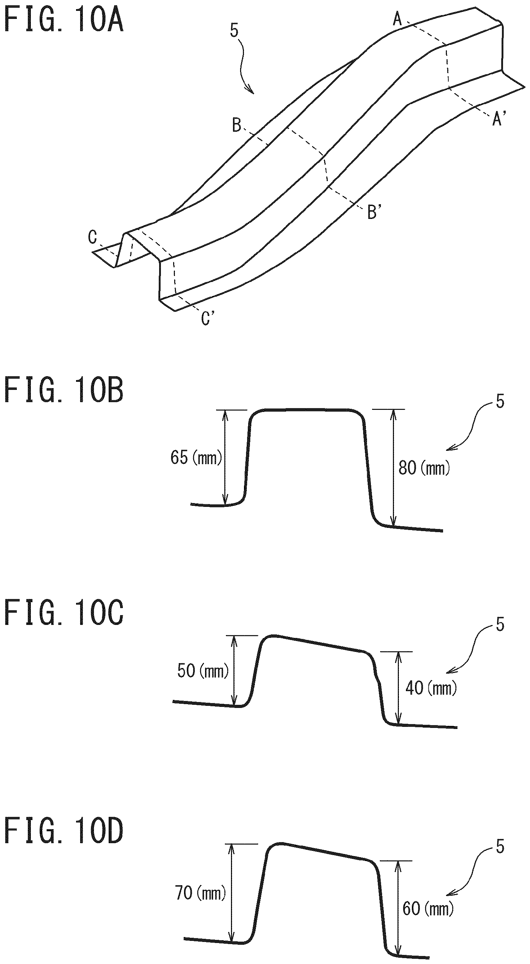

The target component 5 is a component having a complicated shape in which the three-dimensional shape is curved vertically along a longitudinal direction, as illustrated in FIG. 10A, and the cross-sectional shape of the component is not constant, as illustrated in FIGS. 10B to 10D.

As the material thereof, a metal sheet C listed in Table 1 was used.

### [Comparative Example 4-1]

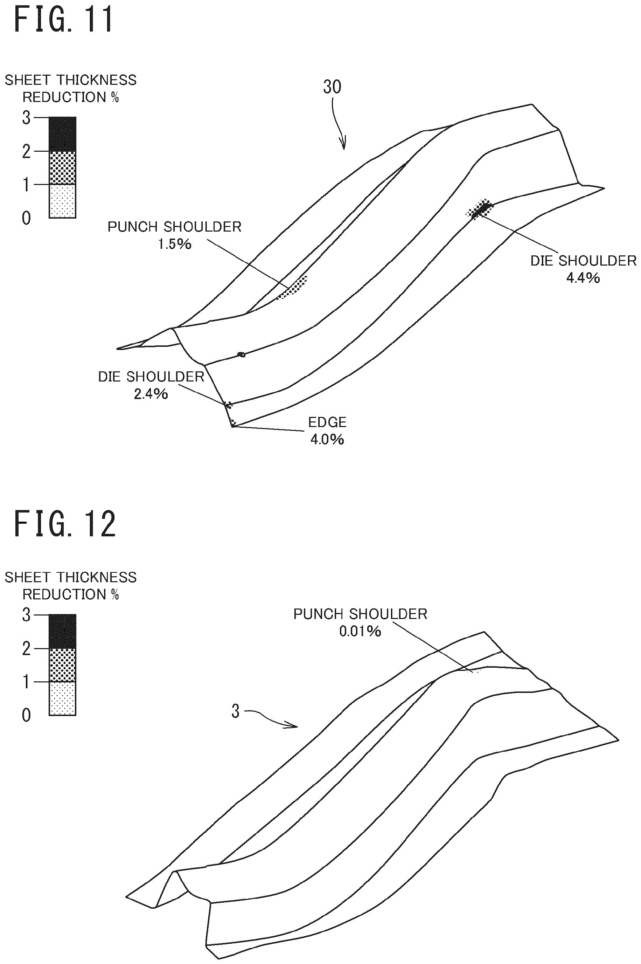

In Comparative Example 4-1, the same preformed shape 30 as that of FIG. 11 was formed by drawing, and was formed into the component shape illustrated in FIG. 10 by drawing in the next step.

The preformed shape 30 of FIG. 8 is a shape in which each of left and right flange ends has been moved in parallel outward by 60 mm with respect to the desired three-dimensional shape illustrated in FIG. 10. In this shape, the maximum amount of deformation in the height direction was 43%.

In the preformed shape 30 of the Comparative Example 4-1, a sheet thickness was significantly reduced in the punch shoulder, the die shoulder, and the edge. Additionally, since the material was stretched, the preformed shape had a line length longer than the final component shape.

### [Example 4-1]

In Example 4-1, the preformed shape 3 that was the shape illustrated in FIG. 12 was formed by drawing (first step 2, and was formed into a component shape using drawing in the next step (second step 4).

The above Example 4-1 caused neither cracks nor wrinkles .

The preformed shape 3 of the above Example 4-1 was a shape in which the entire part of the three-dimensional shape illustrated in FIG. 10 was crushed, and the amount of deformation in the height direction was set to 84%.

The preformed shape 3 of the above Example 4-1 had a sheet thickness reduction rate that was very small, at most 0.01%. Additionally, the preformed shape 3 of Example 4-1 was a preformed shape whose line length was the same as that of the final component shape due to almost no material expansion or contraction.

From the above, it was found that Example 4-1 can manufacture the component having the desired three-dimensional shape while more reliably preventing the occurrence of cracks and wrinkles as compared with Comparative Example 4-1 even though the desired three-dimensional shape is complicated.

Here, this application claims the priority of Japanese Patent Application No. 2018-126982 (filed on July 3, 2018), the entire content of which constitutes a part of the present disclosure herein by reference. While the present invention has been described with reference to the limited number of embodiments, the scope of the invention is not limited thereto, and it is obvious to those skilled in the art that modifications may be made based on the above disclosure. Reference Signs List

- 1:: Metal sheet
- 2:: First step
- 3:: Preformed shape
- 4:: Second step
- 5:: Three-dimensionally shaped component
- 5A:: Top sheet portion
- 5B:: Vertical wall portion
- 5C:: Flange portion
- 11:: Restraining surface

## Claims

1. Amethod for designing a die shape that is a method for designing a die shape for use in a press step before a final press step when forming a metal sheet into a three-dimensionally shaped component by a plurality of stages of press steps, the method comprising designing the die shape in such a manner as to form into a pressed component having a preformed shape including a shape of the three-dimensionally shaped component crushed in a direction in which a shape of at least a part of the three-dimensionally shaped component is straightened.

2. The method for designing a die shape according to claim 1, comprising obtaining the preformed shape including the crushed shape under a load applying condition for applying load to the three-dimensionally shaped component in the straightened direction.

3. A method for manufacturing a pressed component by press forming a metal sheet into a three-dimensionally shaped component, the method comprising:
a first step of press forming the metal sheet into an intermediate component having a preformed shape including a shape of the three-dimensionally shaped component crushed in a direction in which a shape of at least a part of the three-dimensionally shaped component is straightened; and
a second step of press forming the intermediate component into the three-dimensionally shaped component.

4. The method for manufacturing a pressed component according to claim 3, comprising obtaining the preformed shape including the crushed shape under a load applying condition for applying load to the three-dimensionally shaped component in the straightened direction,
wherein a rate of crushing when determining the preformed shape is set such that an amount of deformation in a height direction from the three-dimensional shape in the load applying direction is from 10% to 90%.

5. The method for manufacturing a pressed component according to claim 3 or 4, wherein the three-dimensionally shaped component includes a top sheet portion and a pair of left and right vertical walls continuous to both widthwise sides of the top sheet portion, and the method comprising determining the preformed shape under a load applying condition for applying load to the three-dimensionally shaped component in a state where a restraining surface that is a surface shape in which a longitudinal contour shape of a lower end face of each vertical wall portion is extended to left and right restrains movement of the lower end face of the each vertical wall portion in a normal direction of the restraining surface.

6. The method for manufacturing a pressed component according to claim 5,
wherein the three-dimensional shape is a shape in which a flange portion is continuous to a lower end portion of the each vertical wall portion; and
wherein the restraining surface has a surface shape in which lower surface shapes of the flange portions are extended to left and right.

7. The method for manufacturing a pressed component according to any one of claims 3 to 6, comprising obtaining the preformed shape including the crushed shape under a load applying condition for applying load to the three-dimensionally shaped component in the straightened direction, the direction where load is applied being a stroke direction of a press machine in the second step.

8. The method for manufacturing a pressed component according to any one of claims 3 to 7, comprising obtaining the preformed shape including the crushed shape under the load applying condition for applying load to the three-dimensionally shaped component in the straightened direction, and further changing the preformed shape including the crushed shape into a shape in which the preformed shape is entirely reduced at the same preset reduction rate in the load applying direction to reset the shape of the preformed shape.
